# EUROPEAN PATENT APPLICATION

(11) **EP 4 354 786 A1**
(43) Date of publication of application: **17.04.2024**
(21) Application number: 21944651.5
(22) Date of filing: 11.06.2021
(51) Int. Cl.: H04L 5/14

(54) **INFORMATION CONFIGURATION METHOD AND APPARATUS, USER EQUIPMENT, BASE STATION, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2021/099867
(87) International publication number: WO 2022/257144

(57) **Abstract**

The present disclosure belongs to the technical field of communications, and provides an information configuration method and apparatus, a user equipment, a base station, and a storage medium. The method comprises: receiving reporting configuration information sent by a base station; and, on the basis of the reporting configuration information, reporting full-duplex information to the base station. Hence, in the embodiments of the present disclosure, a method for configuring full-duplex communication that is applied in cellular network networking is provided, so as to satisfy the high requirements of a cellular network system (for example, a 5G system).

## Description

### TECHNICAL FIELD

This disclosure relates to the field of communication technologies, and in particular to an information configuration method and device, a user equipment (UE), a base station, and a storage medium.

### BACKGROUND

The 5G cellular network system has high requirements for the diversity, speed, and number of connections of network services. In addition, the spectral efficiency can be greatly improved by introducing full-duplex technology, so as to meet the high requirements of the 5G cellular network system. Therefore, there is an urgent need for a configuration method applied to full-duplex communication in the cellular network system.

### SUMMARY

The information configuration method and device, UE, base station and storage medium according to this disclosure are directed to propose a configuration method for full-duplex communication in networking of the cellular network.

An information configuration method according to some embodiments of this disclosure is performed by a UE and includes:
receiving report configuration information sent by a base station; and
reporting full-duplex information to the base station based on the report configuration information

An information configuration method according to some other embodiments of this disclosure is performed by a base station and includes:
sending report configuration information to a UE; and
receiving full-duplex information reported by the UE based on the report configuration information.

An information configuration device according to some other embodiments includes:
a receiving module, configured to receive report configuration information sent by a base station; and
a reporting module, configured to report full-duplex information to the base station based on the report configuration information.

An information configuration device according to some other embodiments includes:
a sending module, configured to send report configuration information to a UE; and
a receiving module, configured to receive full-duplex information reported by the UE based on the report configuration information.

A UE according to some other embodiments include: a transceiver; a memory; and a processor connected to the transceiver and the memory respectively, where the processor is configured to control wireless signal transmission and reception of the transceiver by executing computer-executable instructions on the memory, thereby implementing the method according to some embodiments as described above.

A base station according to some other embodiments include: a transceiver; a memory; and a processor connected to the transceiver and the memory respectively, where the processor is configured to control wireless signal transmission and reception of the transceiver by executing computer-executable instructions on the memory, thereby implementing the method according to some other embodiments as described above.

A computer storage medium according to some other embodiments stores computer-executable instructions thereon, where the computer-executable instructions, upon being executed by a processor, are configured to implement the method as described above.

To sum up, based on the information configuration method and device, the UE, the base station, and the storage medium according to some embodiments of this disclosure, the base station sends the report configuration information to the UE, and the UE reports the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

Additional aspects and advantages of the disclosure will be set forth in part in the description which follows, and in part will be obvious from the description, or may be learned by practice of the disclosure.

### BRIEF DESCRIPTION OF THE DRAWINGS

The above and/or additional aspects and advantages of this disclosure will become apparent and understandable from the following description of the embodiments in conjunction with the accompanying drawings.
FIG. 1 is a schematic flowchart of an information configuration method according to some embodiments of this disclosure.
FIG. 2 is a schematic flowchart of an information configuration method according to some other embodiments of this disclosure.
FIG. 3 is a schematic flowchart of an information configuration method according to some other embodiments of this disclosure.
FIG. 4 is a schematic flowchart of an information configuration method according to some other embodiments of this disclosure.
FIG. 5 is a schematic flowchart of an information configuration method according to some other embodiments of this disclosure.
FIG. 6 is a schematic flowchart of an information configuration method according to some other embodiments of this disclosure.
FIG. 7 is a schematic flowchart of an information configuration method according to some other embodiments of this disclosure.
FIG. 8 is a schematic flowchart of an information configuration method according to some other embodiments of this disclosure.
FIG. 9 is a schematic structural diagram of an information configuration device according to some embodiments of this disclosure.
FIG. 10 is a schematic structural diagram of an information configuration device according to some other embodiments of this disclosure.
FIG. 11 is a block diagram of a UE according to some embodiments of this disclosure.
FIG. 12 is a block diagram of a base station according to some embodiments of this disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementation manners described in the following exemplary embodiments do not represent all implementation manners consistent with the embodiments of this disclosure. Rather, they are merely examples of apparatuses and methods consistent with aspects of the disclosed embodiments as recited in the appended claims.

Terms used in the embodiments of this disclosure are for the purpose of describing specific embodiments only, and are not intended to limit the embodiments of this disclosure. As used in the examples of this disclosure and the appended claims, the singular forms "a/an" and "the" are also intended to include the plural forms unless the context clearly dictates otherwise. It should also be understood that the term "and/or" as used herein refers to and includes any and all possible combinations of one or more of the associated items as listed.

It should be understood that although the embodiments of this disclosure may use the terms "first", "second", "third", etc. to describe various information, the information should not be limited to these terms. These terms are only used to distinguish information of the same type from one another. For example, without departing from the scope of the embodiments of this disclosure, first information may also be called second information, and similarly, second information may also be called first information. Depending on the context, the words "if" and "in case" as used herein may be interpreted as "upon" or "when" or "in response to determining that..."

Embodiments of this disclosure are described in detail below, examples of which are illustrated in the accompanying drawings, wherein like or similar reference numerals designate like or similar elements throughout. The embodiments described below by referring to the drawings are exemplary and intended to explain this disclosure, and should not be construed as limiting this disclosure.

In the information configuration method provided by some embodiments of this disclosure, a base station may send report configuration information to a UE, and the UE may report full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

The information configuration method and device, UE, base station, and storage medium provided by this disclosure will be described in detail below with reference to the accompanying drawings.

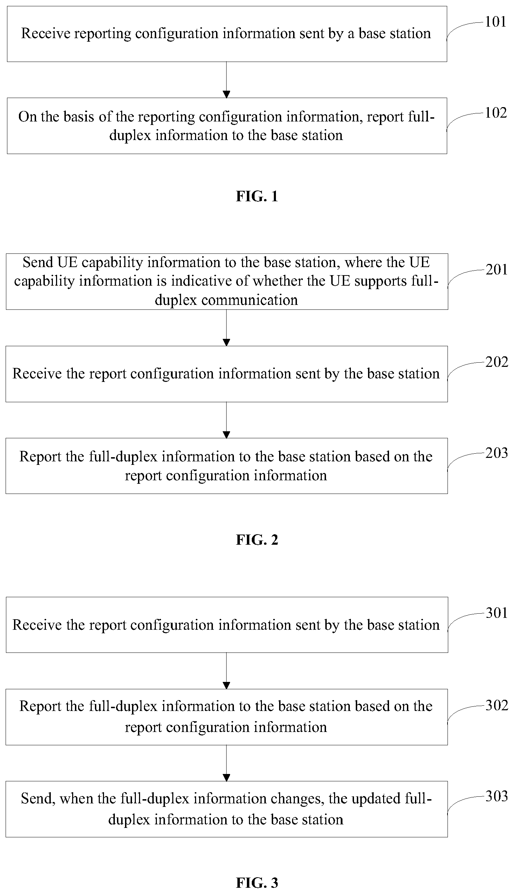

FIG. 1 is a schematic flow diagram of an information configuration method according to some embodiments of this disclosure, which is performed by a UE. As shown in FIG. 1, the information configuration method may include the following steps.

In step 101, the report configuration information sent by the base station is received.

It should be noted that the indication method in some embodiments of this disclosure may be performed by any UE. The UE may be a device that provides voice and/or data connectivity to a user. The UE can communicate with one or more core networks via RAN (Radio Access Network). The UE may be an IoT (Internet of Things) terminal, such as a sensor device, a mobile phone (or called a "cellular" phone) and a computer with an IoT terminal, for example, the device may be fixed, portable, pocket, hand-held, computer-built-in or vehicle-mounted. For example, it may be a station (STA), a subscriber unit, a subscriber station, a mobile station, a mobile, a remote station, an access point, a remote terminal, an access terminal, a user terminal, or a user agent. Alternatively, the UE may also be a device of an unmanned aerial vehicle. Alternatively, the UE may also be a vehicle-mounted device, for example, it may be a trip computer with the wireless communication function, or a wireless terminal connected externally to the trip computer. Alternatively, the UE may also be a roadside device, for example, it may be a street lamp, a signal lamp, or other roadside devices with the wireless communication function.

Herein, in some embodiments of this disclosure, receiving the report configuration information sent by the base station may include: receiving the report configuration information sent by the base station through RRC (Radio Resource Control) signaling. In some embodiments of this disclosure, for the 4G network, the RRC signaling may be "RRC Connection Reconfiguration" signaling. Specifically, the report configuration information may be configured in the "Other Config" information element of the RRC Connection Reconfiguration signaling. In some other embodiments of this disclosure, for the 5G network, the RRC signaling may be "RRC Reconfiguration" signaling. Specifically, the report configuration information may be configured in the "Other Config" information element of the RRC Reconfiguration signaling.

In some embodiments of this disclosure, the report configuration information may specifically include at least one of the following: whether the UE is allowed to report the full-duplex information, requirement for the UE to report the full-duplex information, condition for the UE to report the full-duplex information, content included in the full-duplex information reported by the UE, or a reporting format of the full-duplex information.

It should be noted that in some embodiments of this disclosure, the report configuration information may include any one type of the above-mentioned information, and in some other embodiments of this disclosure, the report configuration information may include any combination of two types, three types, four types of the above-mentioned information, or all five types thereof.

Further, in some embodiments of this disclosure, said requirement for the UE to report the full-duplex information may include a frequency at which the UE reports the full-duplex information.

In some embodiments of this disclosure, said condition for the UE to report the full-duplex information may include: in condition 1, the UE reports the full-duplex information when the throughput of the UE reaches a preset threshold (e.g., 100 Mbps); and/or, in condition 2, the UE reports the full-duplex information when the UE has frequency band information required for full-duplex.

Herein, in some embodiments of this disclosure, the condition of full-duplex information may only include condition 1. In some other embodiments of this disclosure, the condition of full-duplex information may only include condition 2. In some other embodiments of this disclosure, the condition of full-duplex information may include both condition 1 and condition 2.

In some embodiments of this disclosure, the content included in the full-duplex information reported by the UE may include: a full-duplex configuration expected by the UE, and/or a full-duplex configuration supported by the UE.

Herein, in some embodiments of this disclosure, the content included in the full-duplex information reported by the UE may only include the full-duplex configuration expected by the UE. In some other embodiments of this disclosure, the content included in the full-duplex information reported by the UE may only include the full-duplex configuration supported by the UE. In some other embodiments of this disclosure, the content included in the full-duplex information reported by the UE may include both the full-duplex configuration expected by the UE and the full-duplex configuration supported by the UE.

In some embodiments of this disclosure, the full-duplex configuration may specifically include at least one of the following types. Type 1 refers to frequency band information corresponding to full-duplex communication. Type 2 refers to time period information corresponding to full-duplex communication, Type 3 refers to a mode of full-duplex communication (or called "full-duplex communication mode"). Type 4 refers to frequency band information and time period information corresponding to full-duplex communication (e.g., frequencies and time periods at which the UE operates in the full-duplex mode). Herein, in some embodiments of this disclosure, the full-duplex communication mode may include FDM (Frequency Division Multiplexing) or TDM (Time Division Multiplexing).

It should be noted that, in some embodiments of this disclosure, the full-duplex configuration may include any one type of the above-mentioned information, and in some other embodiments of this disclosure, the full-duplex configuration may include any combination of two types, three types of the above-mentioned information, or all four types thereof.

Further, it should be noted that in some embodiments of this disclosure, when the content of the full-duplex information reported by the UE includes both the full-duplex configuration expected by the UE and the full-duplex configuration supported by the UE, the type(s) included in the full-duplex configuration expected by the UE may be the same as the type(s) included in the full-duplex configuration supported by the UE. Moreover, when the type(s) included in the full-duplex configuration expected by the UE is the same as the type(s) included in the full-duplex configuration supported by the UE, in some embodiments of this disclosure, information corresponding to each type of the full-duplex configuration information expected by the UE may be the same as information corresponding to each type of the full-duplex configuration information supported by the UE. In some other embodiments of this disclosure, the information corresponding to each type of the full-duplex configuration information expected by the UE may be different from the information corresponding to each type of the full-duplex configuration information supported by the UE. In some other embodiments of this disclosure, the type(s) included in the full-duplex configuration expected by the UE may also be different from the type(s) included in the full-duplex configuration supported by the UE.

For example, if the base station requires the content of the full-duplex information reported by the UE to include the full-duplex configuration expected by the UE and the full-duplex configuration supported by the UE, then in some embodiments of this disclosure, the full-duplex configuration expected by the UE and the full-duplex configuration supported by the UE may both include the full-duplex communication mode and the frequency band information corresponding to the full-duplex communication. Herein, in some embodiments of this disclosure, the full-duplex communication mode expected by the UE and the full-duplex communication mode supported by the UE may be the same. For example, the full-duplex communication mode expected by the UE and the full-duplex communication mode supported by the UE may both be FDM. In some other embodiments of this disclosure, the full-duplex communication mode expected by the UE may be different from the full-duplex communication mode supported by the UE. For example, the full-duplex communication mode expected by the UE may be FDM, and the full-duplex communication mode supported by the UE may be TDM. In some other embodiments of this disclosure, the full-duplex configuration expected by the UE may include the full-duplex communication mode, and the full-duplex configuration supported by the UE may include frequency band information corresponding to full-duplex communication.

In step 102, full-duplex information is reported to the base station based on the report configuration information.

Herein, in some embodiments of this disclosure, the UE may report the full-duplex information to the base station through RRC signaling. Herein, in some embodiments of this disclosure, the UE may report the full-duplex information to the base station through "UEAssistanceInformation" signaling. Specifically, the full-duplex information may be configured in a "FullDuplexInformation" information element.

In some embodiments of this disclosure, when the contents included in the report configuration information are different, the manners for the UE to report the full-duplex information to the base station are also different.

Specifically, in some embodiments of this disclosure, when the report configuration information includes whether the UE is allowed to report full-duplex information, the manner in which the UE reports the full-duplex information to the base station may include: when the base station allows the UE to report the full-duplex information, the UE reports the full-duplex information to the base station; otherwise, the UE does not report the full-duplex information.

In some other embodiments of this disclosure, when the report configuration information includes the requirement for the UE to report full-duplex information, the manner in which the UE reports the full-duplex information to the base station may include: the UE reports the full-duplex information according to the requirement for reporting the full-duplex information.

For example, in some embodiments of this disclosure, the requirement for the UE to report the full-duplex information includes that the reporting frequency is once every 100 milliseconds, the UE needs to report the full-duplex information to the base station at a frequency of once every 100 milliseconds.

In some other embodiments of this disclosure, when the report configuration information includes the condition for the UE to report the full-duplex information, the manner in which the UE reports the full-duplex information to the base station may include: the UE reports the full-duplex information upon meeting the condition.

For example, in some embodiments of this disclosure, the condition for the UE to report the full-duplex information includes: the UE reports the full-duplex information when the throughput of the UE reaches 100 Mbps, then the UE can report the full-duplex information only when the throughput of the UE reaches 100 Mbps.

In some other embodiments of this disclosure, when the report configuration information includes the content included in the full-duplex information reported by the UE, the manner in which the UE reports the full-duplex information to the base station may include reporting the full-duplex information according to the content included in the full-duplex information reported by the UE.

For example, in some embodiments of this disclosure, the content of the full-duplex information reported by the UE required by the base station includes the full-duplex configuration expected by the UE, where the full-duplex configuration includes the full-duplex communication mode, then the UE needs to report to the base station the full-duplex communication mode expected by the UE upon reporting the full-duplex information to the base station, for example, it may report to the base station that the full-duplex communication mode expected by the UE is TDM.

In some other embodiments of this disclosure, when the report configuration information includes the reporting format of the full-duplex information, the manner in which the UE reports the full-duplex information to the base station may include reporting the full-duplex information according to the reporting format of the full-duplex information.

For example, in some embodiments of this disclosure, the reporting format of the full-duplex information includes that, when reporting the content included in the full-duplex information that the base station requires the UE to report, the full-duplex configuration expected by the UE is placed in the front, followed by the full-duplex configuration supported by the UE. Then the UE should report to the base station the full-duplex configuration expected by the UE and the full-duplex configuration supported by the UE according to the position relationship that the full-duplex configuration expected by the UE is located before the full-duplex configuration supported by the UE.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 2 is a schematic flowchart of an information configuration method according to some other embodiments of this disclosure, which is performed by a UE. As shown in FIG. 2, the method may include following steps.

In step 201, UE capability information is sent to the base station, where the UE capability information is configured to indicate whether the UE supports full-duplex communication.

Herein, in some embodiments of this disclosure, after the UE switches to the connected state, it sends the UE capability information to the base station through RRC signaling. Herein, in some embodiments of this disclosure, for a 4G network, the RRC signaling may be "UE-EUTRA-Capability" signaling, and specifically, the UE capability information may be configured in "OtherParameters" information element of the UE-EUTRA-Capability signaling. In some embodiments of this disclosure, for a 5G network, the RRC signaling may be "UE-NR-Capability" signaling.

In step 202, the report configuration information sent by the base station is received.

In step 203, the full-duplex information is reported to the base station based on the report configuration information.

Herein, for the detailed introduction of steps 202 and 203, reference may be made to the above-mentioned embodiments, and details will be not repeated here in the embodiments of this disclosure.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 3 is a schematic flowchart of an information configuration method according to some other embodiments of this disclosure, which is performed by a UE. As shown in FIG. 3, the method may include following steps.

In step 301, the report configuration information sent by the base station is received.

In step 302, the full-duplex information is reported to the base station based on the report configuration information.

Herein, for the detailed introduction of steps 301 and 302, reference may be made to the above-mentioned embodiments, and details will be not repeated here in the embodiments of this disclosure.

In step 303, when the full-duplex information changes, the updated full-duplex information is sent to the base station.

Herein, in some embodiments of this disclosure, specifically, when the full-duplex configuration expected by the UE and/or the full-duplex configuration supported by the UE in the full-duplex information changes, the UE sends the updated full-duplex information.

In some embodiments of this disclosure, the UE may send the updated full-duplex information to the base station through an updated "UEAssistanceInformation" signaling. Specifically, the updated full-duplex information may be configured in the "FullDuplexInformation" information element of the updated UEAssistanceInformation signaling.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

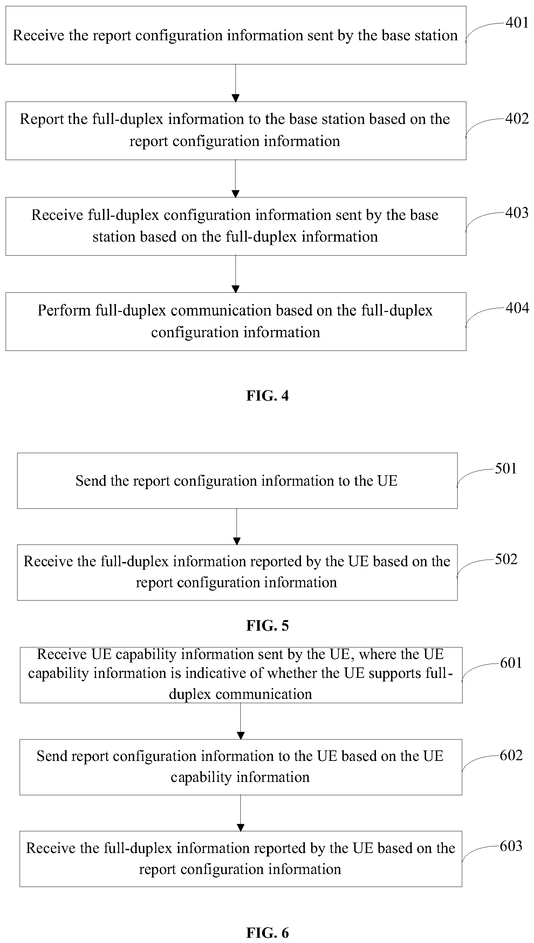

FIG. 4 is a schematic flowchart of an information configuration method according to some other embodiments of this disclosure, which is performed by a UE. As shown in FIG. 4, the method may include following steps.

In step 401, the report configuration information sent by the base station is received.

In step 402, the full-duplex information is reported to the base station based on the report configuration information.

Herein, for the detailed introduction of steps 401 and 402, reference may be made to the above-mentioned embodiments, and details will be not repeated here in the embodiments of this disclosure.

In step 403, full-duplex configuration information sent by the base station based on the full-duplex information is received.

Herein, in some embodiments of this disclosure, after receiving the full-duplex information reported by the UE, the base station may determine the full-duplex configuration information for the UE according to the full-duplex information, and send the full-duplex configuration information to the UE.

Herein, in some embodiments of this disclosure, a manner for the base station to determine the full-duplex configuration information for the UE according to the full-duplex information may include: when the full-duplex information reported by the UE includes the full-duplex configuration information expected by the UE and/or the full-duplex configuration supported by the UE, the base station may perform full-duplex configuration on the UE according to the full-duplex configuration expected by the UE and/or the full-duplex configuration supported by the UE, thereby deriving the full-duplex configuration information.

In step 404, full-duplex communication is performed based on the full-duplex configuration information.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 5 is a schematic flowchart of an information configuration method according to some embodiments of this disclosure, which is performed by a base station. As shown in FIG. 5, the method may include following steps.

In step 501, the report configuration information is sent to the UE.

In step 502, the full-duplex information reported by the UE based on the report configuration information is received.

Herein, for the detailed introduction of steps 501 and 502, reference may be made to the above-mentioned embodiments, and details will be not repeated here in the embodiments of this disclosure.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 6 is a schematic flowchart of an information configuration method according to some embodiments of this disclosure, which is performed by a base station. As shown in FIG. 6, the method may include following steps.

In step 601, UE capability information sent by the UE is received, where the UE capability information is configured to indicate whether the UE supports full-duplex communication.

In step 602, report configuration information is sent to the UE based on the UE capability information.

Herein, in some embodiments of this disclosure, when the UE capability information indicates that the UE supports full-duplex communication, the base station sends the report configuration information to the UE.

In step 603, the full-duplex information reported by the UE based on the report configuration information is received.

Herein, for the detailed introduction of steps 601 to 603, reference may be made to the above-mentioned embodiments, and details will be not repeated here in the embodiments of this disclosure.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

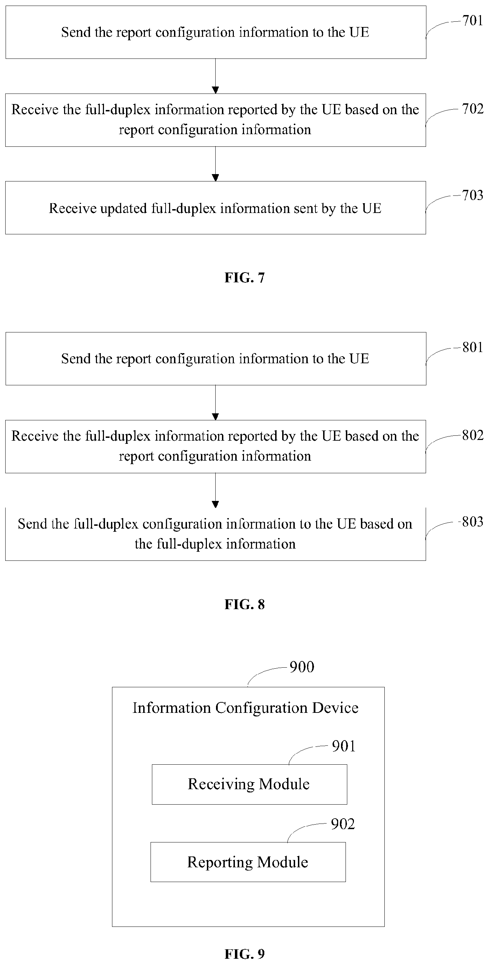

FIG. 7 is a schematic flowchart of an information configuration method according to some embodiments of this disclosure, which is performed by a base station. As shown in FIG. 7, the method may include following steps.

In step 701, the report configuration information is sent to the UE.

In step 702, the full-duplex information reported by the UE based on the report configuration information is received.

In step 703, updated full-duplex information sent by the UE is received.

Herein, for the detailed introduction of steps 701 to 703, reference may be made to the above-mentioned embodiments, and details will be not repeated here in the embodiments of this disclosure.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 8 is a schematic flowchart of an information configuration method according to some embodiments of this disclosure, which is performed by a base station. As shown in FIG. 8, the method may include following steps

In step 801, the report configuration information is sent to the UE.

In step 802, the full-duplex information reported by the UE based on the report configuration information is received.

In step 803, the full-duplex configuration information is sent to the UE based on the full-duplex information.

Herein, for the detailed introduction of steps 801 to 803, reference may be made to the above-mentioned embodiments, and details will be not repeated here in the embodiments of this disclosure.

To sum up, in the information configuration method provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

FIG. 9 is a schematic structural diagram of an information configuration device according to some embodiments of this disclosure. As shown in FIG. 9, the device may include following content.

A receiving module 901 is configured to receive report configuration information sent by a base station.

A reporting module 902 is configured to report full-duplex information to the base station based on the report configuration information.

To sum up, in the information configuration device provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

Optionally, in some embodiments of this disclosure, the report configuration information includes at least one of the following: whether the UE is allowed to report the full-duplex information, requirement for the UE to report the full-duplex information, condition for the UE to report the full-duplex information, content included in the full-duplex information reported by the UE, or a reporting format of the full-duplex information.

Optionally, in some other embodiments of this disclosure, the content included in the full-duplex information reported by the UE includes a full-duplex configuration expected by the UE and/or a full-duplex configuration supported by the UE.

Herein, the full-duplex configuration includes at least one of the following: frequency band information corresponding to full-duplex communication, time period information corresponding to full-duplex communication, a mode of full-duplex communication, or frequency band information and time period information corresponding to full-duplex communication.

Optionally, in some other embodiments of this disclosure, the mode of full-duplex communication includes frequency division multiplexing (FDM) or time division multiplexing (TDM).

Optionally, in some other embodiments of this disclosure, the receiving module is further configured to:
receive the report configuration information sent by the base station through an RRC signaling.

Optionally, in some other embodiments of this disclosure, the reporting module is further configured to:
report the full-duplex information to the base station through an RRC signaling.

Optionally, in some other embodiments of this disclosure, the above-mentioned device is further configured to:
send UE capability information to the base station, where the UE capability information is configured to indicate whether the UE supports full-duplex communication.

Optionally, in some other embodiments of this disclosure, the above-mentioned device is further configured to:
send, when the full-duplex information changes, updated full-duplex information to the base station.

Optionally, in some other embodiments of this disclosure, the above-mentioned device is further configured to:
receive full-duplex configuration information sent by the base station based on the full-duplex information; and
perform full-duplex communication based on the full-duplex configuration information.

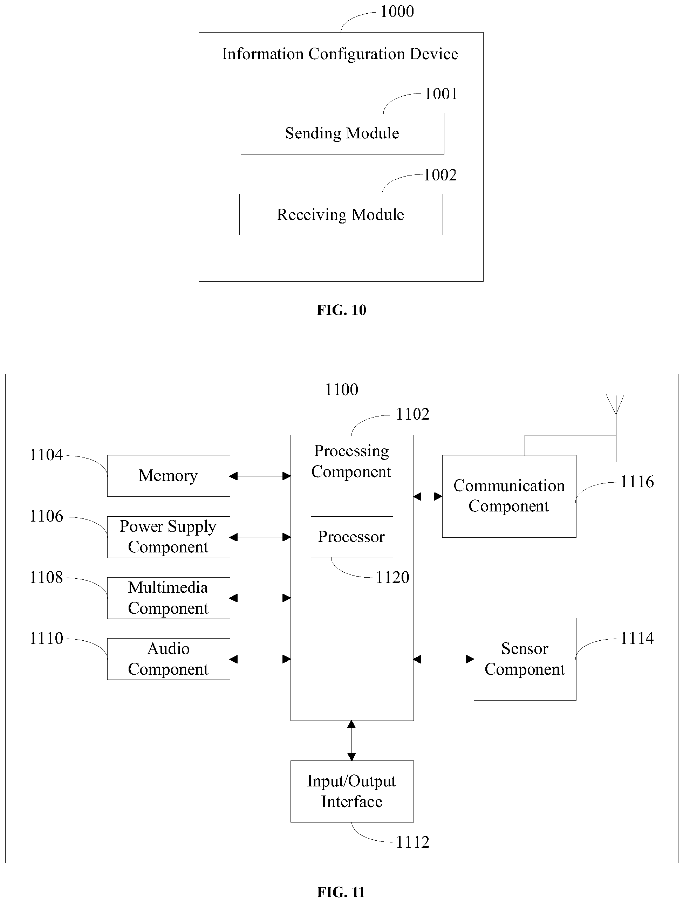

FIG. 10 is a schematic structural diagram of an information configuration device according to some embodiments of this disclosure. As shown in FIG. 10, the device may include following content.

A sending module 1001 is configured to send report configuration information to a UE.

A receiving module 1002 is configured to receive full duplex information reported by the UE based on the report configuration information.

To sum up, in the information configuration device provided by some embodiments of this disclosure, the base station may send the report configuration information to the UE, and the UE may report the full-duplex information to the base station based on the report configuration information, so that, subsequently, the base station can send full-duplex configuration information to the UE based on the full-duplex information, and the UE can perform full-duplex communication based on the full-duplex configuration information. It can be seen that, in some embodiments of this disclosure, a configuration method applied to full-duplex communication in networking of cellular network is provided to meet the high requirements of the cellular network system (e.g., a 5G system).

Optionally, in some embodiments of this disclosure, the report configuration information includes at least one of the following: whether the UE is allowed to report the full-duplex information, requirement for the UE to report the full-duplex information, condition for the UE to report the full-duplex information, content included in the full-duplex information reported by the UE, or a reporting format of the full-duplex information.

Optionally, in some other embodiments of this disclosure, the content included in the full-duplex information reported by the UE includes a full-duplex configuration expected by the UE and/or a full-duplex configuration supported by the UE.

Herein, the full-duplex configuration includes at least one of the following: frequency band information corresponding to full-duplex communication, time period information corresponding to full-duplex communication, a mode of full-duplex communication, or frequency band information and time period information corresponding to full-duplex communication.

Optionally, in some other embodiments of this disclosure, the mode of full-duplex communication includes FDM or TDM.

Optionally, in some other embodiments of this disclosure, the sending module is further configured to:
send the report configuration information to the UE through an RRC signaling.

Optionally, in some other embodiments of this disclosure, the receiving module is further configured to:
receive the full-duplex information reported by the UE through an RRC signaling.

Optionally, in some other embodiments of this disclosure, the above-mentioned device is further configured to:
receive UE capability information sent by the UE, where the UE capability information is configured to indicate whether the UE supports full-duplex communication; and
send the report configuration information to the UE based on the UE capability information.

Optionally, in some other embodiments of this disclosure, the above-mentioned device is further configured to:
receive updated full-duplex information sent by the UE.

Optionally, in some other embodiments of this disclosure, the above-mentioned device is further configured to:
send full-duplex configuration information to the UE based on the full-duplex information.

A computer storage medium provided by some embodiments of this disclosure stores an executable program which, upon being executed by a processor, is configured to implement the method shown in any one of FIG. 1 to FIG. 4 or FIG. 5 to FIG. 8.

In order to implement the above embodiments, this disclosure further proposes a computer program product, including a computer program which, when being executed by a processor, is configured to implement the method shown in any one of FIG. 1 to FIG. 4 or FIG. 5 to FIG. 8.

In addition, in order to realize the above-mentioned embodiments, this disclosure further proposes a computer program which, when being executed by a processor, is configured to implement the method shown in any one of FIG. 1 to FIG. 4 or FIG. 5 to FIG. 8.

FIG. 11 is a block diagram of a UE 1100 according to some embodiments of this disclosure. For example, the UE 1100 may be a mobile phone, a computer, a digital broadcasting terminal device, a messaging device, a game console, a tablet device, a medical device, a fitness device, a personal digital assistant, and the like.

Referring to FIG. 11, UE 1100 may include at least one of the following components: a processing component 1102, a memory 1104, a power supply component 1106, a multimedia component 1108, an audio component 1110, an input/output (I/O) interface 1112, a sensor component 1113, and a communication component 1116.

The processing component 1102 generally controls the overall operations of UE 1100, such as those associated with display, phone calls, data communications, camera operations, and recording operations. The processing component 1102 may include at least one processor 1120 to execute instructions, so as to complete all or part of the steps of the above method. Additionally, the processing component 1102 may include at least one module to facilitate interaction between the processing component 1102 and other components. For example, the processing component 1102 may include a multimedia module to facilitate interaction between the multimedia component 1108 and the processing component 1102.

The memory 1104 is configured to store various types of data to support operations at the UE 1100. Examples of such data include instructions for any application or method operating on UE 1100, contact data, phonebook data, messages, pictures, videos, etc. The memory 1104 may be implemented by any type of volatile or non-volatile memory device or their combination, such as static random access memory (SRAM), electrically erasable programmable read-only memory (EEPROM), erasable programmable read only memory (EPROM), programmable read only memory (PROM), read only memory (ROM), magnetic memory, flash memory, magnetic or optical disk.

The power supply component 1106 provides power to various components of the UE 1100. The power component 1106 may include a power management system, at least one power supply, and other components associated with generating, managing, and distributing power for UE 1100.

The multimedia component 1108 includes a screen providing an output interface between the UE 1100 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touch, slide, and gestures on the touch panel. The touch sensor may not only sense a boundary of a touch or slide action, but also detect a wake-up time and pressure related to the touch or slide operation. In some embodiments, the multimedia component 1108 includes a front camera and/or a rear camera. When the UE1100 is in an operation mode, such as a shooting mode or a video mode, the front camera and/or the rear camera can receive external multimedia data. Each of the front camera and rear camera may be a fixed optical lens system or have focal length and optical zoom capability.

The audio component 1110 is configured to output and/or input audio signals. For example, the audio component 1110 includes a microphone (MIC), which is configured to receive an external audio signal when the UE 1100 is in an operation mode, such as a call mode, a recording mode, and a voice recognition mode. Received audio signals may be further stored in the memory 1104 or sent via the communication component 1116. In some embodiments, the audio component 1110 further includes a speaker for outputting audio signals.

The I/O interface 1112 provides an interface between the processing component 1102 and a peripheral interface module, which may be a keyboard, a click wheel, a button, and the like. These buttons may include, but are not limited to: a home button, volume buttons, a start button, and a lock button.

The sensor component 1113 includes at least one sensor, and is configured to provide various aspects of state assessment for the UE 1100. For example, the sensor component 1113 can detect the on/off state of the device 1100, the relative positioning of components, such as the display and the keypad of the UE 1100. The sensor component 1113 can also detect the position change of the UE 1100 or a component of the UE 1100, and the presence or absence of user contact on the UE 1100, orientation or acceleration/deceleration and temperature change of the UE 1100. The sensor assembly 1113 may include a proximity sensor configured to detect the presence of nearby objects without any physical contact. The sensor assembly 1113 may further include an optical sensor, such as a CMOS or CCD image sensor, for use in imaging applications. In some embodiments, the sensor component 1113 may also include an acceleration sensor, a gyroscope sensor, a magnetic sensor, a pressure sensor or a temperature sensor.

The communication component 1116 is configured to facilitate wired or wireless communications between UE 1100 and other devices. UE 1100 can access wireless networks based on any communication standards, such as WiFi, 2G or 3G, or a combination thereof. In an exemplary embodiment, the communication component 1116 receives broadcast signals or broadcast related information from an external broadcast management system via a broadcast channel. In an exemplary embodiment, the communication component 1116 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology and other technologies.

In an exemplary embodiment, UE 1100 may be implemented by at least one Application Specific Integrated Circuit (ASIC), Digital Signal Processor (DSP), Digital Signal Processing Device (DSPD), Programmable Logic Device (PLD), Field Programmable Gate Array ( FPGA), controller, microcontroller, microprocessor or other electronic components for implementing the above method.

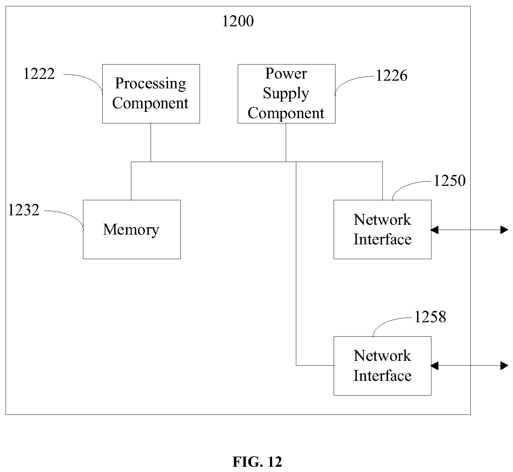

FIG. 12 is a block diagram of a base station 1200 according to some embodiments of the present application. For example, the base station 1200 may be provided as a base transceiver station (BTS). Referring to FIG. 12, the base station 1200 includes a processing component 1226, which further includes at least one processor, and a memory resource represented by a memory 1232 for storing instructions (e.g., application programs) executable by the processing component 1222. The application program stored in memory 1232 may include one or more modules each corresponding to a set of instructions. In addition, the processing component 1226 is configured to execute instructions, so as to implement any of the aforementioned methods performed by the base station, for example, the method shown in FIG. 1.

The base station 1200 may also include a power component 1212 configured to perform power management of the base station 1200, a wired or wireless network interface 1250 configured to connect base station 1200 to a network, and an input-output (I/O) interface 1258. The base station 1200 can operate based on an operating system stored in the memory 1232, such as Windows Server^{™}, Mac OS X^{™}, Unix^{™}, Linux^{™}, Free BSD^{™} or the like.

Other embodiments of the invention will be readily apparent to those skilled in the art from consideration of the specification and practice of the invention disclosed herein. This disclosure is intended to cover any modification, use or adaptation of the present invention, which follow the general principles of the present invention and may include common knowledge or conventional technical means in the art not disclosed in this disclosure. The specification and examples are to be considered exemplary only, with a true scope and spirit of the disclosure being indicated by the following claims.

It should be understood that this disclosure is not limited to the precise structure(s) which has been described above and shown in the drawings, and various modifications and changes may be made without departing from the scope thereof. The scope of this disclosure is limited only by the appended claims

## Claims

1. An information configuration method, being performed by a user equipment (UE) and comprising:
receiving report configuration information sent by a base station; and
reporting full-duplex information to the base station based on the report configuration information.

2. The method as claimed in claim 1, wherein the report configuration information comprises at least one of following: whether the UE is allowed to report the full-duplex information, requirement for the UE to report the full-duplex information, condition for the UE to report the full-duplex information, content included in the full-duplex information reported by the UE, or a reporting format of the full-duplex information.

3. The method as claimed in claim 2, wherein the content included in the full-duplex information reported by the UE comprises a full-duplex configuration expected by the UE and/or a full-duplex configuration supported by the UE; and
wherein the full-duplex configuration comprises at least one of following: frequency band information corresponding to full-duplex communication, time period information corresponding to full-duplex communication, a mode of full-duplex communication, or frequency band information and time period information corresponding to full-duplex communication.

4. The method as claimed in claim 3, wherein the mode of full-duplex communication comprises frequency division multiplexing (FDM) or time division multiplexing (TDM).

5. The method as claimed in claim 1, wherein receiving the report configuration information sent by the base station comprises:
receiving the report configuration information sent by the base station through a radio resource control (RRC) signaling.

6. The method as claimed in claim 1, wherein reporting the full-duplex information to the base station comprises:
reporting the full-duplex information to the base station through an RRC signaling.

7. The method as claimed in claim 1, further comprising:
sending UE capability information to the base station, wherein the UE capability information is configured to indicate whether the UE supports full-duplex communication.

8. The method as claimed in any one of claims 1-4, further comprising:
sending, when the full-duplex information changes, updated full-duplex information to the base station.

9. The method as claimed in any one of claims 1-4, further comprising:
receiving full-duplex configuration information sent by the base station based on the full-duplex information; and
performing full-duplex communication based on the full-duplex configuration information.

10. An information configuration method, being performed by a base station and comprising:
sending report configuration information to a user equipment (UE); and
receiving full-duplex information reported by the UE based on the report configuration information.

11. The method as claimed in claim 10, wherein the report configuration information comprises at least one of following: whether the UE is allowed to report the full-duplex information, requirement for the UE to report the full-duplex information, condition for the UE to report the full-duplex information, content included in the full-duplex information reported by the UE, or a reporting format of the full-duplex information.

12. The method as claimed in claim 11, wherein the content included in the full-duplex information reported by the UE comprises a full-duplex configuration expected by the UE and/or a full-duplex configuration supported by the UE; and
wherein the full-duplex configuration comprises at least one of following: frequency band information corresponding to full-duplex communication, time period information corresponding to full-duplex communication, a mode of full-duplex communication, or frequency band information and time period information corresponding to full-duplex communication.

13. The method as claimed in claim 12, wherein the mode of full-duplex communication comprises frequency division multiplexing (FDM) or time division multiplexing (TDM).

14. The method as claimed in claim 10, wherein sending the report configuration information to the UE comprises: sending the report configuration information to the UE through a radio resource control (RRC) signaling.

15. The method as claimed in claim 10, wherein receiving the full-duplex information reported by the UE comprises: receiving the full-duplex information reported by the UE through an RRC signaling.

16. The method as claimed in claim 10, further comprising:
receiving UE capability information sent by the UE, wherein the UE capability information is configured to indicate whether the UE supports full-duplex communication; and
sending the report configuration information to the UE based on the UE capability information.

17. The method as claimed in any one of claims 10-13, further comprising:
receiving updated full-duplex information sent by the UE.

18. The method as claimed in any one of claims 10-13, further comprising:
sending full-duplex configuration information to the UE based on the full-duplex information.

19. An information configuration device, comprising:
a receiving module, configured to receive report configuration information sent by a base station; and
a reporting module, configured to report full-duplex information to the base station based on the report configuration information.

20. An information configuration device, comprising:
a sending module, configured to send report configuration information to a user equipment (UE); and
a receiving module, configured to receive full-duplex information reported by the UE based on the report configuration information.

21. A user equipment, comprising: a transceiver; a memory; and a processor connected to the transceiver and the memory respectively, wherein the processor is configured to control wireless signal transmission and reception of the transceiver by executing computer-executable instructions on the memory, thereby implementing the method as claimed in any one of claims 1 to 9.

22. A base station, comprising: a transceiver; a memory; and a processor connected to the transceiver and the memory respectively, wherein the processor is configured to control wireless signal transmission and reception of the transceiver by executing computer-executable instructions on the memory, thereby implementing the method as claimed in any one of claims 10 to 18.

23. A computer storage medium storing computer-executable instructions thereon, wherein the computer-executable instructions, upon being executed by a processor, are configured to implement the method as claimed in any one of claims 1 to 9 or 10 to 18.
